# EUROPEAN PATENT APPLICATION

(11) **EP 4 716 264 A1**
(43) Date of publication of application: **25.03.2026**
(21) Application number: 23941099.6
(22) Date of filing: 16.06.2023
(51) Int. Cl.: H04W 12/03

(54) **COMMUNICATION METHOD AND DEVICE**

(71) Applicant: Huawei Technologies Co., Ltd., Shenzhen, Guangdong 518129 (CN)
(72) Inventor: LIU, Peng, Shenzhen, Guangdong 518129 (CN); SUN, Li, Shenzhen, Guangdong 518129 (CN); WANG, Wenhui, Shenzhen, Guangdong 518129 (CN)
(74) Representative: Goddar, Heinz J.
(86) International application number: PCT/CN2023/100803
(87) International publication number: WO 2024/254866

(57) **Abstract**

This application discloses a communication method and apparatus. The method includes: After performing security processing on a plurality of combined spatial bit streams, a first apparatus may send the plurality of spatial bit streams or modulation signals corresponding to the plurality of spatial bit streams. According to the method, errors propagate across the plurality of spatial bit streams. When an error occurs in a spatial bit stream received by a non-target receiving node, an error also occurs in another spatial bit stream received by a target receiving node, so that decoding performance of the non-target receiving node can be deteriorated, and information transmission security can be improved.

## Description

### TECHNICAL FIELD

This application relates to the field of communication technologies, and in particular, to a communication method and apparatus.

### BACKGROUND

Secure transmission is the fundamental assurance for communication. Currently, most secure transmission solutions are key-based. Typical examples include symmetric encryption and asymmetric encryption. In symmetric encryption, two parties share a key. In asymmetric encryption, one communication party transmits a public key to the other party. A transmitter uses the public key to encrypt messages to be sent, and a receiver uses a private key for to decrypt received messages. Regardless of the encryption scheme, the two communication parties need to maintain and manage the keys. Because key maintenance and management require support of complex protocols, vulnerabilities in these protocols are often exploited by adversaries, lowering security of message.

In addition, some messages are transmitted before key agreement, and therefore the key-based secure transmission solution cannot be applied to these messages. Consequently, security of these messages is reduced.

### SUMMARY

This application provides a communication method and apparatus, to improve information transmission security.

According to a first aspect, an embodiment of this application provides a communication method. The method may be performed by a first apparatus. The first apparatus may be an access network device or a terminal device, or may be an apparatus configured in the access network device or the terminal device. This is not limited in this application.

The method includes: A first apparatus combines N first spatial bit streams to obtain a second spatial bit stream, where N is an integer greater than or equal to 2. Then, the first apparatus may perform security processing on the second spatial bit stream to obtain a third spatial bit stream, and split the third spatial bit stream to obtain N fourth spatial bit streams corresponding to the N first spatial bit streams. The first apparatus may send the N fourth spatial bit streams, or send modulation signals corresponding to the N fourth spatial bit streams.

According to the method, the first apparatus may perform security processing on the plurality of combined spatial bit streams. In this way, an error spreads between the plurality of spatial bit streams. If an error occurs in a spatial bit stream received by a non-target receiving node, for example, a packet loss occurs, an error also occurs in another spatial bit stream received by a target receiving node, so that decoding performance of the non-target receiving node can be deteriorated, and information transmission security can be improved.

In a possible design, the first apparatus may send, by using M remote units, the modulation signals corresponding to the N fourth spatial bit streams, where M is a positive integer less than or equal to N. In this design, the first apparatus may include the M remote units, so that the plurality of spatial bit streams can be quickly processed.

In a possible design, the first apparatus may perform physical layer secure transmission processing on a part of the M remote units in a first time period. According to this design, it can be avoided that communication performance of the modulation signals sent by all the remote units is affected, and the information transmission security can be improved while the impact on communication performance is reduced.

In a possible design, the first apparatus may perform physical layer secure transmission processing on a remote unit other than a target remote unit in the M remote units in a second time period, where the target remote unit is a remote unit that is in the M remote units and on which physical layer secure transmission processing is performed in the first time period. According to this design, in different time periods, the first apparatus may perform physical layer secure transmission processing on different remote units, so that it can be avoided that communication performance of modulation signals sent by a part of the remote units is always affected.

In a possible design, the first apparatus may perform physical layer secure transmission processing on the M remote units in a third time period. According to this design, the first apparatus can quickly locate the non-target receiving node.

In a possible design, the performing physical layer secure transmission processing may include: adding noise, for example, adding artificial noise. This design is easy to implement.

In a possible design, the first apparatus may add the noise to non-signal space of a corresponding remote unit. According to this design, impact of the added noise on signal transmission can be reduced, thereby improving signal transmission performance.

In a possible design, the first apparatus may send the N fourth spatial bit streams to M remote units, where M is a positive integer less than or equal to N. In this design, the first apparatus may jointly process the plurality of spatial bit streams with the M remote units, so that an application scope of the solutions of this application can be expanded.

In a possible design, the first apparatus may send, to M remote units, the modulation signals corresponding to the N fourth spatial bit streams, where M is a positive integer less than or equal to N. In this design, the first apparatus may jointly process the plurality of spatial bit streams with the M remote units, so that the application scope of the solutions of this application can be expanded.

Optionally, any one of the M remote units is one of the following: a remote radio unit or a distributed unit.

According to a second aspect, an embodiment of this application provides a communication method. The method may be performed by a second apparatus. The second apparatus may be an access network device or a terminal device, or may be an apparatus configured in the access network device or the terminal device. This is not limited in this application.

The method includes: After receiving modulation signals corresponding to N fourth spatial bit streams, a second apparatus may combine the N fourth spatial bit streams to obtain a third spatial bit stream, where N is an integer greater than or equal to 2. Then, the second apparatus may perform inverse security processing on the third spatial bit stream to obtain a second spatial bit stream, and split the second spatial bit stream to obtain N first spatial bit streams corresponding to the N fourth spatial bit streams.

According to the method, the second apparatus may perform inverse security processing on the plurality of combined spatial bit streams. In this way, an error that occurs on the second apparatus does not spread between the plurality of spatial bit streams. However, if an error occurs in a spatial bit stream received by a non-target receiving node, for example, a packet loss occurs, an error also occurs in another spatial bit stream received by a target receiving node, so that decoding performance of the non-target receiving node can be deteriorated, and information transmission security can be improved.

According to a third aspect, an embodiment of this application provides a communication apparatus, including units configured to perform steps according to any one of the foregoing aspects.

According to a fourth aspect, an embodiment of this application provides a communication apparatus, including a processor. The processor is configured to perform the methods according to the foregoing aspects.

Optionally, the apparatus may further include a memory, configured to store instructions and data. The memory is coupled to the processor. When executing the instructions stored in the memory, the processor may implement the methods according to the foregoing aspects.

According to a fifth aspect, an embodiment of this application provides a communication system, including a first apparatus configured to perform the method according to the first aspect, and a second apparatus configured to perform the method according to the second aspect.

According to a sixth aspect, an embodiment of this application further provides a computer program product including computer-executable instructions. When the computer program product is run, a part of or all steps of the method according to any one of the foregoing aspects are performed.

According to a seventh aspect, an embodiment of this application further provides a computer-readable storage medium. The computer-readable storage medium stores a computer program. When the computer program is executed by a computer, the computer is enabled to perform the method according to any one of the foregoing aspects.

According to an eighth aspect, an embodiment of this application further provides a chip. The chip is configured to read a computer program stored in a memory, to perform the method according to any one of the foregoing aspects.

According to a ninth aspect, an embodiment of this application further provides a chip system. The chip system includes a processor, configured to support a computer apparatus in implementing the method according to any one of the foregoing aspects. In a possible design, the chip system further includes a memory, and the memory is configured to store a program and data that are necessary for the computer apparatus. The chip system may include a chip or may include a chip and another discrete component.

For technical effect that can be achieved in any one of the third aspect to the ninth aspect, refer to descriptions of technical effect that can be achieved in any one of the possible designs in the first aspect or the second aspect. Repeated parts are not described.

### BRIEF DESCRIPTION OF DRAWINGS

FIG. 1 is a diagram of an architecture of a communication system according to an embodiment of this application;
FIG. 2 is a diagram of a keyless secure transmission architecture according to an embodiment of this application;
FIG. 3 is a flowchart of a communication method according to an embodiment of this application;
FIG. 4 is a diagram of an information transmission method in the method shown in FIG. 3 according to an embodiment of this application;
FIG. 5 is an effect diagram of the method shown in FIG. 4 according to an embodiment of this application;
FIG. 6 is a diagram of performing physical layer secure transmission processing according to an embodiment of this application;
FIG. 7 is a diagram of an application scenario according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

Technical solutions provided in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5^{th} generation (5^{th} Generation, 5G) mobile communication system or new radio (new radio, NR), a wireless local area network (wireless local area network, WLAN) system, a wireless fidelity (wireless fidelity, Wi-Fi) system, a 6^{th} generation (6^{th} Generation, 6G) communication system, and a future communication system. The 5G mobile communication system may be non-standalone (non-standalone, NSA) networking or standalone (standalone, SA) networking.

The technical solutions provided in this application may be further applied to machine type communication (machine type communication, MTC), a long term evolution technology for machine-to-machine communication (long term evolution-machine, LTE-M), a device-to-device (device-to device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X may indicate anything). For example, V2X may include vehicle to vehicle (vehicle to vehicle, V2V) communication, vehicle to infrastructure (vehicle to infrastructure, V2I) communication, vehicle to pedestrian communication (vehicle to pedestrian, V2P), vehicle to network (vehicle to network, V2N) communication, or the like.

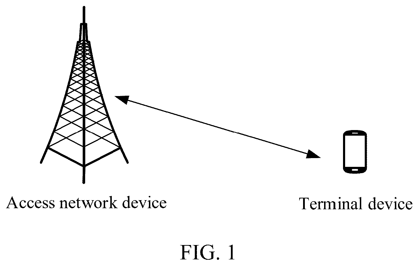

FIG. 1 is a diagram an architecture of a communication system according to an embodiment of this application. As shown in FIG. 1, the communication system may include a terminal device (terminal device) and an access network device.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity for a user), for example, a handheld device or a vehicle-mounted device having a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in internet of vehicles, a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. For example, the wireless terminal in internet of vehicles may be a vehicle-mounted device, an entire vehicle device, a vehicle-mounted module, a vehicle, or the like. The wireless terminal in industrial control may be a camera, a robot, or the like. The wireless terminal in the smart home may be a television, an air conditioner, a robotic vacuum cleaner, a speaker, a set-top box, or the like.

The access network device may be a device in a wireless network, for example, includes a radio access network (radio access network, RAN) node or a radio access network device that connects a terminal device to the wireless network. For example, the access network device is a next generation base station (gNodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), and integrated access and backhaul (integrated access and backhaul, IAB) in 5G. In some implementations, the access network device may alternatively be an access network device in a future communication system (for example, a 6G communication system).

In a network structure, the access network device may alternatively be a central unit (central unit, CU) or a distributed unit (distributed unit, DU), or the access network device may include a CU and a DU. The CU and the DU are separately disposed, or may be included in a same network element, for example, a BBU. It may be understood that the access network device is divided into the CU and the DU from the perspective of logical functions. The CU is connected to the DU through an F1 interface. On behalf of a gNB, the CU may be connected to a core network through an NG interface. The CU and the DU may be physically separated, or may be deployed together. This is not specifically limited in embodiments of this application. One CU may be connected to one DU, or a plurality of DUs may share one CU, so that costs can be reduced, and network extension can be easily performed. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and a remaining radio link control (radio link control, RLC) layer, media access control (media access control, MAC) layer, physical layer (PHY), and the like are deployed on the DU. Embodiments of this application are not completely limited to the foregoing protocol stack splitting manner, and there may be another splitting manner.

In addition, the access network device may alternatively be a radio unit (radio unit, RU, or the like). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU, the DU, or the RU may also have different names, but a person skilled in the art may understand meanings of the names. For example, in an open radio access network (open radio access network, O-RAN) system, a CU may be referred to as an O-CU (open CU), a DU may be referred to as an O-DU (open DU), and an RU may be referred to as an O-RU (open RU).

In embodiments of this application, a communication apparatus configured to implement a function of the access network device or a function of the terminal device may be the access network device or the terminal device, or may be an apparatus that can support the access network device or the terminal device in implementing the function, for example, a chip system, and the apparatus may be installed in the access network device or the terminal device.

It should be understood that FIG. 1 is merely a simplified diagram of an example for ease of understanding. The communication system may further include another access network device and/or another terminal device not drawn in FIG. 1.

It should be further understood that the communication system shown in FIG. 1 is merely an example of an application scenario of embodiments of this application. This application may be further applicable to communication between any two devices, for example, applicable to communication between terminal devices, or applicable to communication between access network devices.

The following describes terms in this application.
1. A spatial bit stream may also be referred to as a spatial data stream, a layer data stream, a layer bit stream, or the like. In this application, different spatial bit streams may be bit streams transmitted in parallel. For example, in a multiple-input multiple-output (multiple-input multiple-output, MIMO) technology, different spatial bit streams may be bit streams at different layers. The layer may be a quantity of different data streams transmitted in parallel.
2. In this application, "when...", "if...", and "if..." may indicate a same meaning, and may be replaced with each other.
3. Keyless secure transmission architecture:

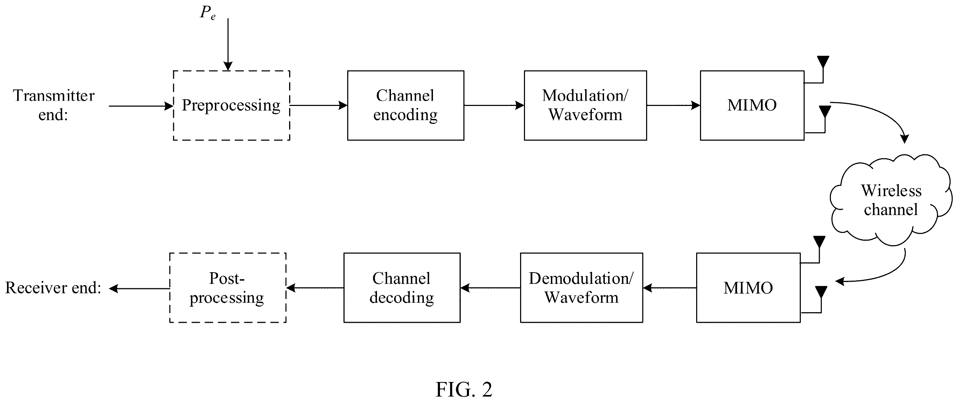

FIG. 2 is a diagram of data transmission in a keyless secure transmission architecture. As shown in FIG. 2, after being preprocessed, to-be-sent first information sequentially enters a channel encoding procedure, a modulation/waveform procedure, and a MIMO procedure, and is sent by a transmitter end to a receiver end over a wireless channel. After the information received by the receiver end sequentially undergoes a MIMO procedure, a demodulation/waveform procedure, and a channel decoding procedure, the first information may be obtained through post-processing.

The post-processing is inverse processing of preprocessing. The preprocessing and the post-processing may be performed by a security module. At the transmitter end, the security module is configured to perform security processing on the input information. At the receiver end, the security module is configured to perform inverse security processing on the input information. Optionally, the security module may be a randomness extractor, configured to perform randomness extraction processing on the input information. The randomness extractor may be a hardware device, or may be implemented by software.

How to transmit data by using the security module needs to be further studied.

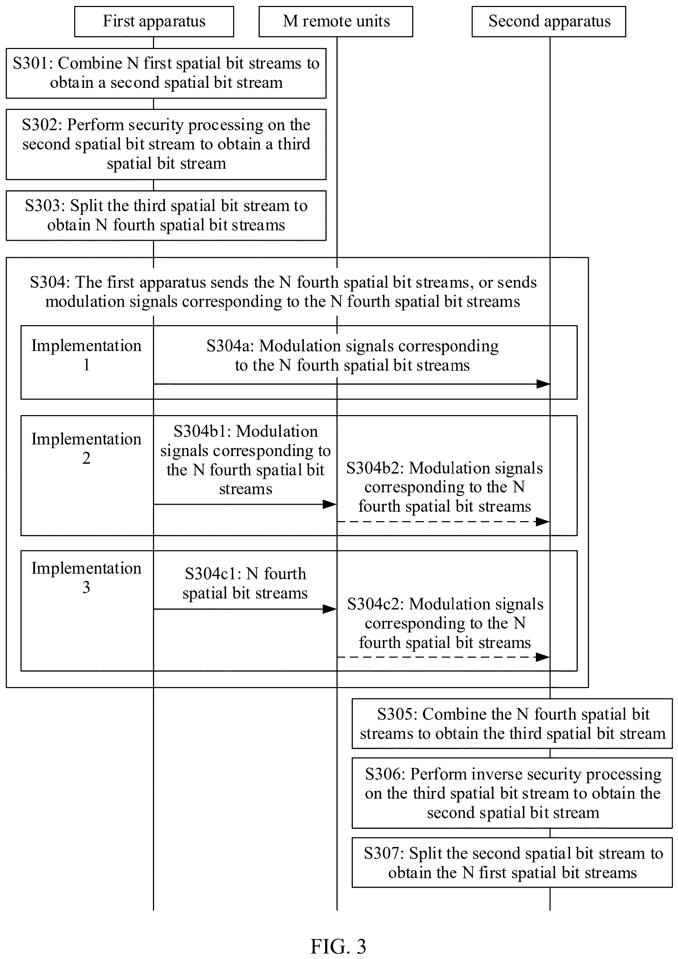

An embodiment of this application provides a communication method. The method may be applied to the communication system shown in FIG. 1. Refer to a flowchart shown in FIG. 3. The following specifically describes a procedure of the method by using an example in which a transmitter end is a first apparatus and a receiver end is a second apparatus. The first apparatus may be an access network device or a terminal device, may be an apparatus (for example, a chip system or a module) that is in the access network device and that is configured to implement functions of the access network device, or may be an apparatus (for example, a chip system or a module) that is in the terminal device and that is configured to implement functions of the terminal device. The second apparatus may be an access network device or a terminal device, may be an apparatus that is in the access network device and that is configured to implement functions of the access network device, or may be an apparatus that is in the terminal device and that is configured to implement functions of the terminal device.

The method includes S301 to S307:
S301: The first apparatus combines N first spatial bit streams to obtain a second spatial bit stream, where N is an integer greater than or equal to 2.

Optionally, combination processing includes but is not limited to at least one of the following: serial processing (also referred to as parallel-to-serial conversion or cascading processing), cross combination, and the like. The following describes the combination processing by using an example in which the N first spatial bit streams include a spatial bit stream a₁ and a spatial bit stream a₂, the spatial bit stream a₁ includes 0000, and the spatial bit stream a₂ includes 1111. For example, if the combination processing includes the serial processing, the first apparatus may combine the spatial bit stream a₁ and the spatial bit stream a₂ to obtain the second spatial bit stream 00001111. For another example, if the combination processing includes the cross combination, the first apparatus may combine the spatial bit stream a₁ and the spatial bit stream a₂ to obtain the second spatial bit stream 01010101.

In some possible manners, before combining the N first spatial bit streams, the first apparatus may separately perform cyclic redundancy check (cyclic redundancy check, CRC) on the N first spatial bit streams. For example, an i^{th} first spatial bit stream is a spatial bit stream aᵢ, where i ranges from 1 to N. The first apparatus may perform CRC check on the spatial bit stream aᵢ to obtain xᵢ=aᵢ||crc(aᵢ). Herein, "∥" indicates cascading, and crc(aᵢ) indicates that a CRC operation is performed on the spatial bit stream aᵢ, to obtain a parity bit.

S302: The first apparatus performs security processing on the second spatial bit stream to obtain a third spatial bit stream.

In some possible manners, the security processing is implemented by using a first security module. In this case, the first apparatus may input the second spatial bit stream to the first security module to obtain the third spatial bit stream. The first security module is configured to perform security processing on the second spatial bit stream. For example, the first security module is a randomness extractor, and the security processing is randomness extraction processing. In this manner, channel noise entropy may be accumulated between a plurality of spatial bit streams. When an error occurs in information in a spatial bit stream, the error spreads between the plurality of spatial bit streams, so that decoding performance of a non-target receiving node is deteriorated, and information transmission security is improved.

S303: The first apparatus splits the third spatial bit stream to obtain N fourth spatial bit streams.

The N fourth spatial bit streams correspond to the N first spatial bit streams. For example, an i^{th} fourth spatial bit stream is obtained by performing security processing on a bit included in the i^{th} first spatial bit stream, where i ranges from 1 to N.

Optionally, splitting processing includes but is not limited to at least one of the following: parallel processing (also referred to as serial-to-parallel conversion), cross splitting, and the like. The following describes the splitting processing by using an example in which the third spatial bit stream includes 00110011, and the N fourth spatial bit streams include a spatial bit stream b₁ and a spatial bit stream b₂. For example, if the splitting processing includes the parallel processing, the first apparatus splits the third spatial bit stream to obtain the spatial bit stream b₁ and the spatial bit stream b₂: 0011 and 0011. For another example, if the splitting processing includes the cross splitting, the first apparatus splits the third spatial bit stream to obtain the spatial bit stream b₁ and the spatial bit stream b₂: 0101 and 0101.

In this application, the splitting processing may be inverse processing of the combination processing. For example, when the combination processing is the serial processing, the splitting processing may be the parallel processing. For another example, when the combination processing is the cross combination, the splitting processing may be the cross splitting.

It should be understood that the N fourth spatial bit streams may be a direct result obtained by performing splitting processing on the third spatial bit stream, or may be a result obtained by processing the direct result. The following uses an example in which the direct result is N fifth spatial bit streams for description. In some examples, the N fourth spatial bit streams may be the N fifth spatial bit streams. In some other examples, the first apparatus separately processes the N fifth spatial bit streams to obtain the N fourth spatial bit streams. For example, the first apparatus separately performs channel encoding on the N fifth spatial bit streams to obtain the N fourth spatial bit streams.

S304: The first apparatus sends the N fourth spatial bit streams, or the first apparatus sends modulation signals corresponding to the N fourth spatial bit streams. Correspondingly, the second apparatus receives the modulation signals corresponding to the N fourth spatial bit streams.

In some possible manners, "the first apparatus sends the modulation signals corresponding to the N fourth spatial bit streams" may be implemented in an implementation 1 or an implementation 2.

Implementation 1: S304 includes: S304a: The first apparatus sends, to the second apparatus, the modulation signals corresponding to the N fourth spatial bit streams. Correspondingly, the second apparatus receives, from the first apparatus, the modulation signals corresponding to the N fourth spatial bit streams.

Optionally, the implementation 1 may be applied to but is not limited to any one of the following scenario 1 to scenario 3.

Scenario 1: The first apparatus is a terminal device, or an apparatus configured to implement a function of the terminal device. In the scenario 1, after separately performing a channel encoding procedure, a modulation procedure, a MIMO procedure, and a waveform procedure on the N fourth spatial bit streams, the first apparatus may send the modulation signals corresponding to the N fourth spatial bit streams.

Scenario 2: The first apparatus is an access network device, or an apparatus configured to implement a function of the access network device. In addition, the first apparatus can separately perform a channel encoding procedure, a modulation procedure, a MIMO procedure, and a waveform procedure on the N fourth spatial bit streams. For example, the first apparatus is a gNodeB. In the scenario 2, after separately performing the channel encoding procedure, the modulation procedure, the MIMO procedure, and the waveform procedure on the N fourth spatial bit streams, the first apparatus may send the modulation signals corresponding to the N fourth spatial bit streams.

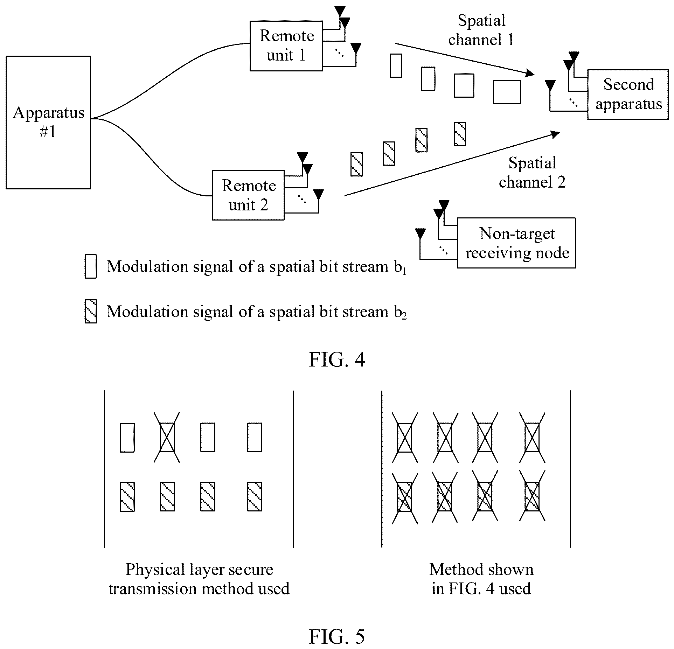

Scenario 3: The first apparatus includes an apparatus #1 and M remote units (an example in which M is 2 is used in the figure) shown in FIG. 4, where M is a positive integer less than or equal to N. The apparatus #1 is configured to perform S301 to S303 to obtain the N fourth spatial bit streams, and the M remote units are configured to send the modulation signals corresponding to the N fourth spatial bit streams. For example, the first apparatus is an access network device or an apparatus configured to implement a function of the access network device, and the apparatus #1 is a CU or an apparatus configured to implement a function of the CU. Any one of the M remote units is a DU or an apparatus configured to implement a function of the DU, or is an RRU or an apparatus configured to implement a function of the RRU.

In some possible manners, when the implementation 1 is applied to the scenario 3, the first apparatus may send, by using the M remote units, the modulation signals corresponding to the N fourth spatial bit streams. Each remote unit may be configured to send a modulation signal corresponding to one or more fourth spatial bit streams. For example, when M is equal to N, the first apparatus may send, by using a remote unit i, a modulation signal corresponding to a fourth spatial bit stream i, where i ranges from 1 to N. For another example, when N is 3 and M is 2, the first apparatus may send, by using a remote unit 1, a modulation signal corresponding to a fourth spatial bit stream 1, and send, by using a remote unit 2, a modulation signal corresponding to a fourth spatial bit stream 2 and a modulation signal corresponding to a fourth spatial bit stream 3. The following describes an operation of each component of the first apparatus in this manner by using examples.

In some examples (referred to as an example 1 below), the apparatus #1 may send the N fourth spatial bit streams to the M remote units after obtaining the N fourth spatial bit streams. After separately performing the channel encoding procedure, the modulation procedure, the MIMO procedure, and the waveform procedure on the N fourth spatial bit streams, the M remote units send the modulation signals corresponding to the N fourth spatial bit streams.

In some other examples (referred to as an example 2 below), the N fourth spatial bit streams obtained by the apparatus #1 are spatial bit streams obtained through channel encoding. After the apparatus #1 sends the N fourth spatial bit streams to the M remote units, the M remote units may separately perform the modulation procedure, the MIMO procedure, and the waveform procedure on the N fourth spatial bit streams, and then send the modulation signals corresponding to the N fourth spatial bit streams.

In some other examples (referred to as an example 3 below), the N fourth spatial bit streams obtained by the apparatus #1 are spatial bit streams obtained through channel encoding. The apparatus #1 separately performs the modulation procedure on the N fourth spatial bit streams to obtain the modulation signals corresponding to the N fourth spatial bit streams, and sends, to the M remote units, the modulation signals corresponding to the N fourth spatial bit streams. After separately performing the waveform procedure on the modulation signals corresponding to the N fourth spatial bit streams, the M remote units send the modulation signals corresponding to the N fourth spatial bit streams. Optionally, before sending the modulation signals corresponding to the N fourth spatial bit streams, the apparatus #1 may further perform the MIMO procedure on the modulation signals corresponding to the N fourth spatial bit streams. Alternatively, before separately performing the waveform procedure on the modulation signals corresponding to the N fourth spatial bit streams, the M remote units may further perform the MIMO procedure on the modulation signals corresponding to the N fourth spatial bit streams.

Currently, when a communication system includes a plurality of remote units, physical layer secure transmission processing is performed on each remote unit. For example, artificial noise is added to each remote unit. However, after physical layer secure transmission processing is performed, communication performance of the remote unit is affected. How to improve information transmission security while reducing impact on the communication performance needs to be further studied.

In some possible manners, the first apparatus may perform physical layer secure transmission processing on a part of the M remote units in a first time period. The first time period may be preset. For example, the first time period is a time period in which the first apparatus transmits information for the first time. For another example, the first time period is a time period in which the first apparatus transmits information.

For example, as shown in FIG. 4, the M remote units include the remote unit 1 and the remote unit 2, and the modulation signals corresponding to the N fourth spatial bit streams include a modulation signal of the spatial bit stream b₁ and a modulation signal of the spatial bit stream b₂. In the first time period, the first apparatus sends the modulation signal of the spatial bit stream b₁ by using the remote unit 1, sends the modulation signal of the spatial bit stream b₂ by using the remote unit 2, performs physical layer secure transmission processing on the remote unit 1, and does not perform physical layer secure transmission processing on the remote unit 2. FIG. 5 shows effect of the method shown in FIG. 4. As shown in a left figure in FIG. 5, if the N fourth spatial bit streams are not obtained through S301 to S303, and the first apparatus performs physical layer secure transmission processing on the remote unit 1 only when sending a second modulation signal of the spatial bit stream b₁, in the signals received by the non-target receiving node, an error only occurs in the second modulation signal of the spatial bit stream b₁. As shown in a right figure in FIG. 5, if the N fourth spatial bit streams are obtained through S301 to S303, and the first apparatus performs physical layer secure transmission processing on the remote unit 1 only when transmitting the second modulation signal of the spatial bit stream b₁, because an error spreads between the N fourth spatial bit streams, in the signals received by the non-target receiving node, errors occur in both the modulation signal of the spatial bit stream b₁ and the modulation signal of the spatial bit stream b₂.

Therefore, in this manner, the first apparatus performs physical layer secure transmission processing on the part of the M remote units, so that it can be avoided that communication performance of the modulation signals sent by all the remote units is affected, and the information transmission security can be improved while the impact on the communication performance is reduced.

To avoid that communication performance of modulation signals sent by a part of the remote units is always affected, in different time periods, the first apparatus may perform physical layer secure transmission processing on different remote units. Specifically, the first apparatus may perform physical layer secure transmission processing on the part of the M remote units in the first time period, and the part of remote unit may be referred to as a target remote unit. The first apparatus performs physical layer secure transmission processing on one or more remote units other than the target remote unit in the M remote units in the second time period. The second time period and the first time period may be different. For example, an intersection set of the second time period and the first time period is an empty set. The first time period and the second time period may be preset. For example, the first time period is the time period in which the first apparatus transmits the signal for the first time, and the first time period is a time period in which the first apparatus transmits a signal for the second time.

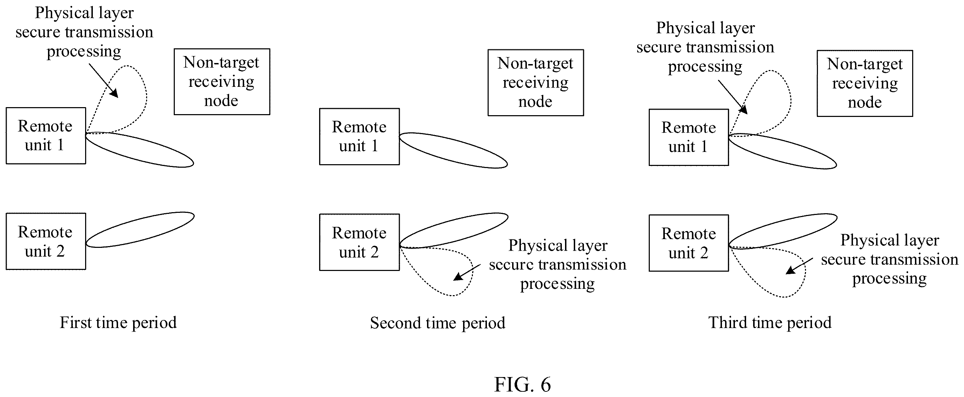

For example, the M remote units include the remote unit 1 and the remote unit 2. As shown in a left figure in FIG. 6, in the first time period, the first apparatus performs physical layer secure transmission processing on the remote unit 1, and does not perform physical layer secure transmission processing on the remote unit 2. As shown in a middle figure in FIG. 6, in the second time period, the first apparatus performs physical layer secure transmission processing on the remote unit 2, and does not perform physical layer secure transmission processing on the remote unit 1.

In some possible manners, the first apparatus performs physical layer secure transmission processing on the M remote units in a third time period. The third time period is different from both the second time period and the first time period. For example, an intersection set of the third time period and the second time period is an empty set, and an intersection set of the third time period and the first time period is an empty set. The third time period may be preset. For example, the third time period is a time period in which the first apparatus transmits a signal for the third time. For example, the M remote units include the remote unit 1 and the remote unit 2. As shown in a right figure in FIG. 6, the first apparatus performs physical layer secure transmission processing on the remote unit 1 and the remote unit 2 in the third time period. In this manner, the first apparatus can quickly locate the non-target receiving node.

The following describes the physical layer secure transmission processing.

In this application, physical layer secure transmission processing is performed on the remote unit, so that a bit error platform can be formed on the non-target receiving node side, thereby improving the information transmission security. In some possible manners, the performing physical layer secure transmission processing may include: adding noise, for example, adding artificial noise, so that a bit error rate of the non-target receiving node is higher than a threshold. When adding the noise to the remote unit, the first apparatus may add the noise to signal space of the remote unit, or may add the noise to non-signal space (for example, null space) of the remote unit. If the noise is added to the non-signal space of the remote unit, the impact on the performance of the signal sent by the remote unit can be reduced. For example, the first apparatus may add the noise to non-signal space of a part of the M remote units in the first time period. The first apparatus may add the noise to non-signal space of a remote unit other than the target remote unit in the M remote units in the second time period. The first apparatus may add the noise to non-signal space of the M remote units in the third time period.

Implementation 2: S304 includes S304b1: The first apparatus sends, to the M remote units, the modulation signals corresponding to the N fourth spatial bit streams.

The first apparatus may send, to each of the M remote units, a modulation signal corresponding to one or more of the N fourth spatial bit streams. For example, when M is equal to N, the first apparatus may send, to a remote unit i, a modulation signal corresponding to a fourth spatial bit stream i, where i ranges from 1 to N. For another example, when N is 3 and M is 2, the first apparatus may send, to a remote unit 1, a modulation signal corresponding to a fourth spatial bit stream 1, and send, to a remote unit 2, a modulation signal corresponding to a fourth spatial bit stream 2 and a modulation signal corresponding to a fourth spatial bit stream 3.

Optionally, after S304c1, the method shown in FIG. 3 further includes:
S304b2: The M remote units send, to the second apparatus, the modulation signals corresponding to the N fourth spatial bit streams. Correspondingly, the second apparatus receives, from the M remote units, the modulation signals corresponding to the N fourth spatial bit streams.

Each remote unit is configured to send, to the second apparatus, a modulation signal corresponding to one or more fourth spatial bit streams. For example, when M is equal to N, the remote unit i may send, to the second apparatus, the modulation signal corresponding to the fourth spatial bit stream i, where i ranges from 1 to N. For another example, when N is 3 and M is 2, the remote unit 1 may send, to the second apparatus, the modulation signal corresponding to the fourth spatial bit stream 1, and the remote unit 2 sends, to the second apparatus, the modulation signal corresponding to the fourth spatial bit stream 2 and the modulation signal corresponding to the fourth spatial bit stream 3.

In some possible manners, the implementation 2 may be applied to but is not limited to the following scenario 1.

Scenario 1: The first apparatus includes the apparatus #1 shown in FIG. 4. The system in which the first apparatus is located further includes the M remote units (an example in which M is 2 is used in the figure) shown in FIG. 4. The apparatus #1 is configured to perform S301 to S303 to obtain N fourth spatial bit streams, and obtain, based on the N fourth spatial bit streams, the modulation signals corresponding to the N fourth spatial bit streams. The M remote units are configured to send the modulation signals corresponding to the N fourth spatial bit streams. For specific content of the first apparatus, the apparatus #1, and the M remote units, refer to the descriptions of the scenario 3. When the implementation 2 is applied to the scenario 1, for operations of the apparatus #1 and the M remote units, refer to the example 3 in the implementation 1. Details are not described herein again.

In some possible manners, "the first apparatus sends the N fourth spatial bit streams" in S304 may be implemented in an implementation 3.

Implementation 3: S304 includes S304c1: The first apparatus sends the N fourth spatial bit streams to the M remote units.

The first apparatus may send one or more of the N fourth spatial bit streams to each of the M remote units. For example, when M is equal to N, the first apparatus may send a fourth spatial bit stream i to a remote unit i, where i ranges from 1 to N. For another example, when N is 3 and M is 2, the first apparatus may send a fourth spatial bit stream 1 to a remote unit 1, and send a fourth spatial bit stream 2 and a fourth spatial bit stream 3 to a remote unit 2.

Optionally, after S304bl, the method shown in FIG. 3 further includes:
S304c2: The M remote units send, to the second apparatus, the modulation signals corresponding to the N fourth spatial bit streams. Correspondingly, the second apparatus receives, from the M remote units, the modulation signals corresponding to the N fourth spatial bit streams.

For specific content of S304c2, refer to S304b2. Details are not described herein again.

In some possible manners, the implementation 3 may be applied to but is not limited to the following scenario A.

Scenario A: The first apparatus includes the apparatus #1 shown in FIG. 4. The system in which the first apparatus is located further includes the M remote units (an example in which M is 2 is used in the figure) shown in FIG. 4. The apparatus #1 is configured to: perform S301 to S303 to obtain the N fourth spatial bit streams, and send the N fourth spatial bit streams. The M remote units are configured to send the modulation signals corresponding to the N fourth spatial bit streams. For specific content of the first apparatus, the apparatus #1, and the M remote units, refer to the descriptions of the scenario 3. When the implementation 3 is applied to the scenario A, for operations of the apparatus #1 and the M remote units, refer to the example 1 and the example 2 in the implementation 1. Details are not described herein again.

Optionally, in the implementation 2 and the implementation 3, the M remote units may implement same functions as the M remote units in the implementation 1. For example, physical layer secure transmission processing may be performed on a part of the M remote units in a first time period. For another example, physical layer secure transmission processing may be performed on the part of the M remote units in the first time period, and the part of remote unit may be referred to as a target remote unit. The first apparatus may perform physical layer secure transmission processing on one or more remote units other than the target remote unit in the M remote units in a second time period. For still another example, physical layer secure transmission processing may be performed on the M remote units in a third time period. For specific content of the M remote units, refer to the descriptions in the implementation 1. Details are not described herein again.

S305: The second apparatus combines the N fourth spatial bit streams to obtain the third spatial bit stream.

S305 is inverse processing of S303. For specific content, refer to S303. Repeated parts are not described again. For specific content of the combination processing, refer to S301. Details are not described herein again.

Optionally, before combining the N fourth spatial bit streams, the second apparatus may separately perform a waveform procedure, a MIMO procedure, a demodulation procedure, and a channel decoding procedure on the signals corresponding to the N fourth spatial bit streams, to obtain the N fourth spatial bit streams.

S306: The second apparatus performs inverse security processing on the third spatial bit stream to obtain the second spatial bit stream.

In some possible manners, the inverse security processing is implemented by using a second security module. In this case, the second apparatus may input the third spatial bit stream to the second security module to obtain the second spatial bit stream. The second security module is configured to perform security processing on the third spatial bit stream. For example, the second security module is a randomness extractor, and the inverse security processing is inverse randomness extraction processing.

S307: The second apparatus splits the second spatial bit stream to obtain the N first spatial bit streams.

S307 is inverse processing of S301. For specific content, refer to S301. Repeated parts are not described again. For specific content of the splitting processing, refer to S303. Details are not described herein again.

Optionally, after performing the splitting processing, the second apparatus may separately perform CRC check on the N first spatial bit streams. If check on any first spatial bit stream succeeds, the second apparatus may determine that the first spatial bit stream is correctly received.

According to the method shown in FIG. 3, the first apparatus may perform security processing on the plurality of combined spatial bit streams. In this way, an error spreads between the plurality of spatial bit streams. If an error occurs in a spatial bit stream received by a non-target receiving node, for example, a packet loss occurs, an error also occurs in another spatial bit stream received by a target receiving node, so that decoding performance of the non-target receiving node can be deteriorated, and information transmission security can be improved.

In addition, if the method is applied to a distributed MIMO system, the system sends, by using a plurality of remote units, modulation signals corresponding to a plurality of spatial bit streams, and physical layer secure transmission processing needs to be performed only on a part of the remote units, so that performance of decoding, by a non-target receiving node, the modulation signals corresponding to the plurality of spatial bit streams can be affected. This improves information transmission security while impact on performance of communication between the first apparatus and the second apparatus is reduced.

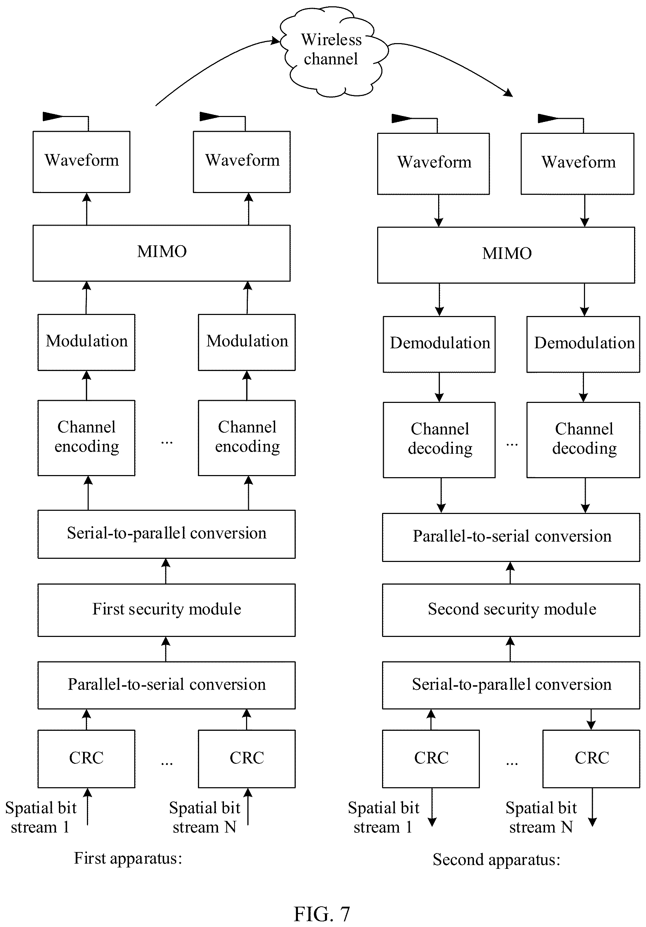

FIG. 7 is a diagram of an application scenario according to this application. With reference to FIG. 7, the following describes application of the method shown in FIG. 3 to the application scenario shown in FIG. 7.

### 1. First apparatus side

As shown in FIG. 7, N first spatial bit streams include a spatial bit stream 1 to a spatial bit stream N. After separately performing CRC check on the N first spatial bit streams, the first apparatus performs parallel-to-serial conversion to obtain a second spatial bit stream. The first apparatus inputs the second spatial bit stream to a first security module to obtain a third spatial bit stream. Then, the first apparatus may perform serial-to-parallel conversion on the third spatial bit stream to obtain N fourth spatial bit streams. After separately performing a channel encoding procedure and a modulation procedure on the N fourth spatial bit streams to obtain modulation signals corresponding to the N fourth spatial bit streams, the first apparatus may perform a MIMO procedure and a waveform procedure on the modulation signals corresponding to the N fourth spatial bit streams, and send, over a wireless channel, the modulation signals corresponding to the N fourth spatial bit streams.

### 2. Second apparatus side

As shown in FIG. 7, after receiving the modulation signals corresponding to the N fourth spatial bit streams, the second apparatus may separately perform a waveform procedure, a MIMO procedure, a demodulation procedure, and a channel decoding procedure on the modulation signals corresponding to the N fourth spatial bit streams, to obtain the N fourth spatial bit streams. The second apparatus performs parallel-to-serial conversion on the N fourth spatial bit streams to obtain the third spatial bit stream. The second apparatus inputs the third spatial bit stream to a second security module to obtain the second spatial bit stream. Then, the second apparatus performs serial-to-parallel conversion on the second spatial bit stream to obtain the N first spatial bit streams, and separately performs CRC check on the N first spatial bit streams.

In the application scenario shown in FIG. 7, the first apparatus may perform security processing on the plurality of combined spatial bit streams. In this way, an error spreads between the plurality of spatial bit streams. If an error occurs in a spatial bit stream received by a non-target receiving node, for example, a packet loss occurs, an error also occurs in another spatial bit stream received by a target receiving node, so that decoding performance of the non-target receiving node can be deteriorated, and information transmission security can be improved.

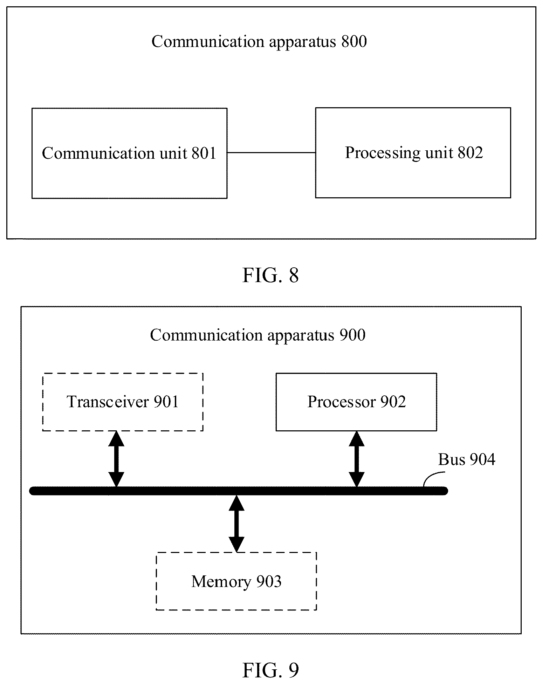

Based on a same technical concept as the method embodiment in FIG. 3, an embodiment of this application provides a communication apparatus shown in FIG. 8, and the communication apparatus may be configured to perform functions of related steps in the foregoing method embodiment. The function may be implemented by hardware, or may be implemented by software or by hardware executing corresponding software. The hardware or the software includes one or more modules corresponding to the function. A structure of the communication apparatus is shown in FIG. 8, and includes a communication unit 801 and a processing unit 802. The communication apparatus 800 may be used in a terminal device or an access network device, and may implement the communication method provided in the foregoing embodiments and examples of this application. The following describes functions of the units in the communication apparatus 800.

The communication unit 801 is configured to: receive and send information. In some manners, the communication unit 801 may be implemented through a physical interface, a communication module, a communication interface, or an input/output interface. The communication apparatus 800 may be connected to a network cable or a cable by using the communication unit, to establish a physical connection to another device. In some other manners, the communication unit 801 may be implemented by a transceiver, for example, a mobile communication module. The mobile communication module may include at least one antenna, at least one filter, a switch, a power amplifier, a low noise amplifier (low noise amplifier, LNA), and the like.

The processing unit 802 may be configured to support the communication apparatus 800 in performing a processing action in the foregoing method embodiment. The processing unit 802 may be implemented by a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In an implementation, the communication apparatus 800 is used in the first apparatus in the embodiment of this application shown in FIG. 3. The following describes specific functions of the processing unit 802 in this implementation.

The processing unit 802 is configured to: combine N first spatial bit streams to obtain a second spatial bit stream, where N is an integer greater than or equal to 2; perform security processing on the second spatial bit stream to obtain a third spatial bit stream; split the third spatial bit stream to obtain N fourth spatial bit streams, where the N fourth spatial bit streams correspond to the N first spatial bit streams; and send the N fourth spatial bit streams by using the communication unit 801, or send modulation signals corresponding to the N fourth spatial bit streams.

In a first possible implementation, the processing unit 802 is specifically configured to send, by using M remote units, the modulation signals corresponding to the N fourth spatial bit streams, where M is a positive integer less than or equal to N.

In some possible manners, the processing unit 802 is further configured to perform physical layer secure transmission processing on a part of the M remote units in a first time period.

Optionally, the processing unit 802 is further configured to perform physical layer secure transmission processing on a remote unit other than a target remote unit in the M remote units in a second time period, where the target remote unit is a remote unit that is in the M remote units and on which physical layer secure transmission processing is performed in the first time period.

Optionally, the processing unit 802 is further configured to perform physical layer secure transmission processing on the M remote units in a third time period.

In some possible manners, the processing unit 802 is configured to perform physical layer secure transmission processing in the following manner: adding noise.

For example, the processing unit 802 is configured to add noise to non-signal space of a corresponding remote unit.

In a second possible implementation, the processing unit 802 is specifically configured to send the N fourth spatial bit streams to M remote units by using the communication unit 801, where M is a positive integer less than or equal to N.

In a third possible implementation, the processing unit 802 is specifically configured to send, to M remote units by using the communication unit 801, the modulation signals corresponding to the N fourth spatial bit streams, where M is a positive integer less than or equal to N.

Optionally, any one of the M remote units is one of the following: a remote radio unit or a distributed unit.

In another implementation, the communication apparatus 800 is used in the second apparatus in the embodiment of this application shown in FIG. 3. The following describes specific functions of the processing unit 802 in this implementation.

The processing unit 802 is configured to: receive, by using the communication unit 801, modulation signals corresponding to N fourth spatial bit streams, where N is an integer greater than or equal to 2; combine the N fourth spatial bit streams to obtain a third spatial bit stream; perform inverse security processing on the third spatial bit stream to obtain a second spatial bit stream; and split the second spatial bit stream to obtain N first spatial bit streams, where the N first spatial bit streams correspond to the N fourth spatial bit streams.

It should be noted that, in the foregoing embodiments of this application, division into the modules is an example, is merely logical function division, and may be other division in an actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium, and includes several instructions for instructing a computer device (which may be a personal computer, a server, or a network device) or a processor (processor) to perform all or a part of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 9, and the communication apparatus may be configured to perform related steps in the foregoing method embodiment. The communication apparatus may be used in a terminal device or an access network device, may implement the communication method provided in the foregoing embodiments and examples of this application, and has a function of the communication apparatus shown in FIG. 8. As shown in FIG. 9, the communication apparatus 900 includes a processor 902. Optionally, the communication apparatus 900 further includes a transceiver 901 and a memory 903. The transceiver 901, the processor 902, and the memory 903 are connected to each other.

Optionally, the transceiver 901, the processor 902, and the memory 903 are connected to each other through a bus 904. The bus 904 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, the bus is indicated by only one thick line in FIG. 9, but this does not indicate that there is only one bus or one type of bus.

The transceiver 901 is configured to: receive and send information, to implement communication and interaction with another device. For example, the transceiver 901 may be implemented through a physical interface, a communication module, a communication interface, or an input/output interface.

The processor 902 may be configured to support the communication apparatus 900 in performing a processing action in the foregoing method embodiment. When the communication apparatus 900 is configured to implement the foregoing method embodiment, the processor 902 may be further configured to implement the functions of the processing unit 802. The processor 902 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

In an implementation, the communication apparatus 900 is used in the first apparatus in the embodiment of this application shown in FIG. 3. The following describes specific functions of the processor 902 in this implementation.

The processor 902 is configured to: combine N first spatial bit streams to obtain a second spatial bit stream, where N is an integer greater than or equal to 2; perform security processing on the second spatial bit stream to obtain a third spatial bit stream; split the third spatial bit stream to obtain N fourth spatial bit streams, where the N fourth spatial bit streams correspond to the N first spatial bit streams; and send the N fourth spatial bit streams by using the transceiver 901, or send modulation signals corresponding to the N fourth spatial bit streams.

In another implementation, the communication apparatus 900 is used in the second apparatus in the embodiment of this application shown in FIG. 3. The following describes specific functions of the processor 902 in this implementation.

The processor 902 is configured to: receive, by using the transceiver 901, modulation signals corresponding to N fourth spatial bit streams, where N is an integer greater than or equal to 2; combine the N fourth spatial bit streams to obtain a third spatial bit stream; perform inverse security processing on the third spatial bit stream to obtain a second spatial bit stream; and split the second spatial bit stream to obtain N first spatial bit streams, where the N first spatial bit streams correspond to the N fourth spatial bit streams.

For specific functions of the processor 902, refer to the descriptions in the communication method provided in the foregoing embodiments and examples of this application, and the specific function descriptions of the communication apparatus 800 in the embodiment of this application shown in FIG. 8. Details are not described herein again.

The memory 903 is configured to store program instructions and/or data, and the like. Specifically, the program instructions may include program code, and the program code includes computer operation instructions. The memory 903 may include a RAM, and may further include a non-volatile memory (non-volatile memory), for example, at least one disk memory. The processor 902 executes the program instructions stored in the memory 903, and uses the data stored in the memory 903, to implement the foregoing function, so as to implement the communication method provided in the foregoing embodiment of this application. The memory 903 may be integrated with the processor 902, or may be a memory outside the communication apparatus.

It may be understood that the memory 903 in FIG. 9 of this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and is used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type.

Based on the foregoing embodiments, an embodiment of this application further provides a computer program product including computer-executable instructions. When the computer program product is run, the method provided in the foregoing embodiments is performed.

Based on the foregoing embodiments, an embodiment of this application further provides a computer-readable storage medium. The computer-readable storage medium stores a computer program. When the computer program is executed by a computer, the computer is enabled to perform the methods provided in the foregoing embodiments.

The storage medium may be any usable medium that can be accessed by the computer. The following provides an example but does not impose a limitation: The computer-readable medium may include a RAM, a ROM, an EEPROM, a CD-ROM, another optical disc storage, a disk storage medium, another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip or may include a chip and another discrete component.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. A term "and/or" describes an association relationship between associated objects and indicates that three relationships may exist. For example, A and/or B may indicate the following three cases: Only A exists, both A and B exist, and only B exists, where A and B may be singular or plural. In text descriptions of this application, a character "/" usually indicates an "or" relationship between the associated objects. "Including at least one of A, B, and C" may indicate: including A; including B; including C; including A and B; including A and C; including B and C; and including A, B, and C.

It may be understood that various numbers in embodiments of this application are merely used for distinguishing for ease of description and are not used to limit the scope of embodiments of this application. Sequence numbers of the foregoing processes do not mean an execution sequence, and the execution sequences of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
combining N first spatial bit streams to obtain a second spatial bit stream, wherein N is an integer greater than or equal to 2;
performing security processing on the second spatial bit stream to obtain a third spatial bit stream;
splitting the third spatial bit stream to obtain N fourth spatial bit streams, wherein the N fourth spatial bit streams correspond to the N first spatial bit streams; and
sending the N fourth spatial bit streams, or sending modulation signals corresponding to the N fourth spatial bit streams.

2. The method according to claim 1, wherein the sending the modulation signals corresponding to the N fourth spatial bit streams comprises:
sending, by using M remote units, the modulation signals corresponding to the N fourth spatial bit streams, wherein M is a positive integer less than or equal to N.

3. The method according to claim 2, further comprising:
performing physical layer secure transmission processing on a part of the M remote units in a first time period.

4. The method according to claim 3, further comprising:
performing physical layer secure transmission processing on a remote unit other than a target remote unit in the M remote units in a second time period, wherein the target remote unit is a remote unit that is in the M remote units and on which physical layer secure transmission processing is performed in the first time period.

5. The method according to claim 3 or 4, further comprising:
performing physical layer secure transmission processing on the M remote units in a third time period.

6. The method according to any one of claims 3 to 5, wherein the performing physical layer secure transmission processing comprises:
adding noise.

7. The method according to claim 6, wherein the adding the noise comprises:
adding the noise to non-signal space of a corresponding remote unit.

8. The method according to claim 1, wherein the sending the N fourth spatial bit streams comprises:
sending the N fourth spatial bit streams to M remote units, wherein M is a positive integer less than or equal to N.

9. The method according to claim 1, wherein the sending the modulation signals corresponding to the N fourth spatial bit streams comprises:
sending, to M remote units, the modulation signals corresponding to the N fourth spatial bit streams, wherein M is a positive integer less than or equal to N.

10. The method according to any one of claims 2 to 9, wherein any one of the M remote units is one of the following:
a remote radio unit or a distributed unit.

11. A communication method, comprising:
receiving modulation signals corresponding to N fourth spatial bit streams, wherein N is an integer greater than or equal to 2;
combining the N fourth spatial bit streams to obtain a third spatial bit stream;
performing inverse security processing on the third spatial bit stream to obtain a second spatial bit stream; and
splitting the second spatial bit stream to obtain N first spatial bit streams, wherein the N first spatial bit streams correspond to the N fourth spatial bit streams.

12. A communication apparatus, comprising:
a communication unit, configured to: receive and send information; and
a processing unit, configured to:
combine N first spatial bit streams to obtain a second spatial bit stream, wherein N is an integer greater than or equal to 2;
perform security processing on the second spatial bit stream to obtain a third spatial bit stream;
split the third spatial bit stream to obtain N fourth spatial bit streams, wherein the N fourth spatial bit streams correspond to the N first spatial bit streams; and
send the N fourth spatial bit streams by using the communication unit, or send modulation signals corresponding to the N fourth spatial bit streams.

13. The apparatus according to claim 12, wherein the processing unit is specifically configured to send, by using M remote units, the modulation signals corresponding to the N fourth spatial bit streams, wherein M is a positive integer less than or equal to N.

14. The apparatus according to claim 12, wherein the processing unit is further configured to perform physical layer secure transmission processing on a part of the M remote units in a first time period.

15. The apparatus according to claim 14, wherein the processing unit is further configured to perform physical layer secure transmission processing on a remote unit other than a target remote unit in the M remote units in a second time period, wherein the target remote unit is a remote unit in the M remote units that performs physical layer secure transmission processing in the first time period.

16. The apparatus according to claim 14 or 15, wherein the processing unit is further configured to perform physical layer secure transmission processing on the M remote units in a third time period.

17. The apparatus according to any one of claims 14 to 16, wherein the processing unit is configured to perform physical layer secure transmission processing in the following manner:
adding noise.

18. The apparatus according to claim 17, wherein the processing unit is configured to add the noise in the following manner: adding the noise to non-signal space of a corresponding remote unit.

19. The apparatus according to claim 12, wherein the processing unit is specifically configured to send the N fourth spatial bit streams to M remote units by using the communication unit, wherein M is a positive integer less than or equal to N.

20. The apparatus according to claim 12, wherein the processing unit is specifically configured to send, to M remote units by using the communication unit, the modulation signals corresponding to the N fourth spatial bit streams, wherein M is a positive integer less than or equal to N.

21. The apparatus according to any one of claims 13 to 20, wherein any one of the M remote units is one of the following:
a remote radio unit or a distributed unit.

22. A communication apparatus, comprising:
a communication unit, configured to: receive and send information; and
a processing unit, configured to:
receive, by using the communication unit, modulation signals corresponding to N fourth spatial bit streams, wherein N is an integer greater than or equal to 2;
combine the N fourth spatial bit streams to obtain a third spatial bit stream;
perform inverse security processing on the third spatial bit stream to obtain a second spatial bit stream; and
split the second spatial bit stream to obtain N first spatial bit streams, wherein the N first spatial bit streams correspond to the N fourth spatial bit streams.

23. A communication apparatus, comprising a processor, wherein the processor is configured to perform the method according to any one of claims 1 to 11.

24. A communication system, comprising:
a first apparatus, configured to implement the method according to any one of claims 1 to 10; and
a second apparatus, configured to implement the method according to claim 11.

25. A computer-readable storage medium, wherein the computer-readable storage medium stores a computer program or instructions, and when the computer program or the instructions are executed by a communication apparatus, the method according to any one of claims 1 to 11 is implemented.

26. A chip, wherein the chip is coupled to a memory, and the chip reads a computer program stored in the memory, to perform the method according to any one of claims 1 to 11.

27. A computer program product, wherein the computer program product comprises computer program code, and when the computer program code is run, the method according to any one of claims 1 to 11 is implemented.
